# FASCICULE DE BREVET EUROPEEN

(11) **EP 2 465 720 B1**
(45) Date de publication et mention de la délivrance du brevet: **26.08.2015**
(21) Numéro de dépôt: 11192164.9
(22) Date de dépôt: 06.12.2011
(51) Int. Cl.: B60K 11/04, B62D 25/08

(54) **Dispositif de maintien pour module d'échange de chaleur de véhicule automobile, et module d'échange de chaleur correspondant**
Haltevorrichtung für Wärmetauschermodul eines Kraftfahrzeugs, und entsprechendes Wärmetauschermodul
Supporting device for a heat-exchange module of an automobile and corresponding heat-exchange module

(30) Priorité: 20.12.2010 FR 1060809
(43) Date de publication de la demande: 20.06.2012
(73) Titulaire: Valeo Systemes Thermiques, 78320 Le Mesnil Saint Denis (FR)
(72) Inventeur: Arab, Karim, 92100 Boulogne-Billancourt (FR); N'Guyen, Dinh-Luyen, 78180 Montigny-le-Bretonneux (FR); Biraeu, Fabien, 78280 Guyancourt (FR)
(74) Mandataire: Metz, Gaëlle

(56) Documents cités:
- EP-A1- 1 188 645
- EP-A1- 1 232 931
- FR-A1- 2 869 286
- FR-A1- 2 901 230
- US-A1- 2006 152 022

## Description

L'invention concerne le maintien d'un équipement de véhicule automobile, tel qu'un module d'échange de chaleur, sur une structure porteuse du véhicule, notamment sur un support de face avant du véhicule.

L'invention concerne encore le module d'échange de chaleur correspondant.

Un tel module d'échange de chaleur comprend par exemple un échangeur thermique tel que le radiateur de refroidissement du moteur du véhicule. Le module peut comprendre en outre au moins un autre échangeur thermique, par exemple un condenseur d'une boucle de climatisation, et, éventuellement, un groupe moto-ventilateur propre à générer un flux d'air traversant le ou les échangeurs de chaleur composant le module.

Ce module d'échange de chaleur doit être monté sur une structure porteuse du véhicule automobile, c'est-à-dire, généralement soit sur une poutre supérieure et une poutre inférieure faisant partie de la caisse du véhicule, soit encore un support ou module de face avant, prêt à être monté sur le véhicule par le constructeur.

Le support de face avant est un élément de structure du véhicule, qui est susceptible d'intégrer divers équipements du véhicule, tels que projecteurs, clignotants, avertisseur sonore, échangeur thermique, groupe moto-ventilateur ou module de refroidissement complet, etc.

Le module d'échange de chaleur doit être maintenu par la structure porteuse mais il est souhaitable de limiter les dégradations de l'équipement qui seraient occasionnées par un choc accidentel, d'absorber les vibrations en service et de compenser les variations de dimensions dues aux dilatations thermiques.

Selon une solution connue, le module d'échange de chaleur est fixé sur la structure porteuse du véhicule par l'intermédiaire de plots et de pions permettant deux positions pour le pion : une position initiale et une position reculée en cas de choc frontal du véhicule. Ainsi, sous l'effet d'un choc, le module d'échange de chaleur passe d'une position initiale à une position reculée par rapport à la position initiale.

Cependant ce recul du module d'échange de chaleur peut se faire de manière brutale sous l'effet d'un choc et la phase d'arrêt en position reculée peut également se faire de manière brutale risquant d'endommager le module d'échange de chaleur.

Selon une autre solution connue, un dispositif complexe avec notamment des bras articulés et avec des réglages fins, permet également de déplacer le module d'échange de chaleur vers une position reculée en cas de choc frontal.

En outre, ces aménagements sont en particulier prévus pour un choc normalisé dit choc DANNER. Il s'agit à l'heure actuelle d'un choc frontal du côté gauche du véhicule et à une vitesse allant jusqu'à 15 Km/H. Ce choc normalisé est utilisé pour l'instant en France et en Allemagne.

Ces aménagements spécifiques entraînent donc un surcoût pour les pays qui n'utilisent pas le choc DANNER.

L'invention a pour objectif de pallier les inconvénients de l'art antérieur en proposant un dispositif de maintien permettant d'absorber de façon simple un choc, notamment de type choc DANNER.

Un example de module d'éxchange de chaleur et dispositif, correspondant de maintien dudit module est indiqué dans le document D1 = EP 1188645, qui comporte les caractéristiques préliminaires de la revendication 1.

À cet effet, l'invention a pour objet un module d'échange de chaleur d'un véhicule automobile sur une structure porteuse dudit véhicule.

Ledit dispositif de maintien peut en outre comporter une ou plusieurs caractéristiques suivantes, prises séparément ou en combinaison :
- ledit module d'échange de chaleur est monté en face avant dudit véhicule et ledit choc est un choc frontal dans l'axe dudit véhicule à une vitesse inférieure ou égale à 15 km/h,
- ledit choc est un choc normalisé dit choc DANNER,
- ledit premier point de fixation et ledit second point de fixation sont opposés
- ledit second point de fixation est du côté dudit choc, ce côté est déterminé le long d'un axe latéral dudit véhicule, il s'agit du côté où l'on est le plus susceptible d'avoir un accident; par exemple le côté gauche notamment pour un choc dit DANNER,
- ledit second moyen de fixation amovible comporte au moins une pièce de retenue sécable en cas de choc,
- ladite au moins une pièce de retenue sécable est une pièce de clipsage,
- ledit second moyen de fixation amovible comporte une première fixation audit module d'échange de chaleur et une deuxième fixation à ladite structure porteuse dudit véhicule, et en ce qu'une seule desdites fixations est amovible en cas de choc,
- ladite première fixation est amovible, de sorte que ledit second moyen de fixation se désolidarise dudit module d'échange de chaleur en cas de choc,
- ladite deuxième fixation est amovible, de sorte que ledit second moyen de fixation se désolidarise de ladite structure porteuse en cas de choc
- ledit second moyen de fixation amovible comporte un support de fixation présentant : au moins un premier logement de réception d'une contre-forme correspondante, et au moins un décrochement communiquant avec ledit au moins un premier logement,
- ledit support de fixation est en matériau plastique,
- ledit décrochement forme un couloir pour l'introduction de ladite contre-forme correspondante lors de la fixation sur ladite structure porteuse, et pour le désengagement de ladite contre-forme correspondante en cas de choc,
- ledit au moins un premier logement de réception comporte une ouverture de forme générale sensiblement circulaire communiquant avec ledit décrochement, et configurée pour coopérer avec une contre-forme correspondante réalisée sous la forme d'une came de forme sensiblement oblongue, présentant une longueur sensiblement inférieure au diamètre de ladite ouverture circulaire et une largeur sensiblement inférieure à la largeur dudit décrochement,
- ladite ouverture et ledit décrochement sont débouchants selon un axe débouchant de part et d'autre dudit support de fixation,
- ledit support est configuré pour coopérer avec une contre-forme correspondante portée par ledit module d'échange de chaleur,
- ladite ouverture et ledit décrochement débouchants sont configurés pour coopérer d'une part avec une contre-forme portée par un premier échangeur thermique dudit module d'échange de chaleur et d'autre part avec une contre-forme portée par un deuxième échangeur thermique dudit module d'échange de chaleur,
- ledit support de fixation comporte au moins un second logement de réception d'une pièce de fixation stable en cas de choc,
- ledit au moins un second logement présente une ouverture débouchante,
- ledit support de fixation comporte un amortisseur disposé entre ledit au moins un second logement et ladite pièce de fixation, et faisant saillie par rapport audit support de fixation,
- ledit support présente une forme générale sensiblement en « 8 » dont une boucle est fermée et l'autre boucle est ouverte pour la fixation amovible,
- ledit second moyen de fixation amovible comporte au moins un troisième logement supplémentaire de réception d'une pièce de fixation de réparation ultérieure au choc,
- ladite pièce de fixation de réparation ultérieure est une vis.

L'invention concerne aussi un module d'échange de chaleur pour véhicule automobile, comprenant au moins un échangeur thermique et un dispositif de maintien à une structure porteuse dudit véhicule tel que défini ci-dessus.

Ledit module d'échange de chaleur peut en outre comporter une ou plusieurs caractéristiques suivantes, prises séparément ou en combinaison :
- ledit module d'échange de chaleur est un module de refroidissement,
- ledit au moins un échangeur thermique porte au moins une came configurée pour coopérer avec un support de fixation, ladite came présentant une forme générale sensiblement oblongue, avec une longueur sensiblement inférieure au diamètre de ladite ouverture circulaire et une largeur sensiblement inférieure à la largeur dudit décrochement,
- ledit au moins un échangeur thermique porte une butée de retenue de ladite came dans ladite ouverture circulaire selon l'axe débouchant dudit support,
- ladite butée est réalisée sous la forme d'une rondelle de diamètre supérieur au diamètre de ladite ouverture circulaire dudit support de fixation, ladite rondelle étant superposée sur ladite came.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente de façon schématique et simplifiée un module de refroidissement monté sur une face avant de véhicule automobile par l'intermédiaire d'un dispositif de maintien,
- la figure 2 représente un exemple de réalisation du module de refroidissement de la figure 1,
- la figure 3 est une vue partielle d'un échangeur thermique du module de refroidissement,
- la figure 4 est une vue partielle de l'échangeur de la figure 3 présentant une rondelle de butée pour le support de fixation,
- la figure 5 est une vue partielle des deux échangeurs du module de refroidissement de la figure 2,
- la figure 6 illustre un support de fixation du dispositif de maintien,
- la figure 7 est une vue partielle d'un échangeur thermique du module de refroidissement fixé à un longeron du véhicule via la support de fixation du dispositif de maintien de la figure 6,
- la figure 8a est une première vue partielle de côté de deux échangeurs thermiques du module de refroidissement fixés à un longeron du véhicule via un support de fixation du dispositif de maintien,
- la figure 8b est une deuxième vue partielle en perspective de deux échangeurs thermiques du module de refroidissement fixés à un longeron du véhicule via un support de fixation du dispositif de maintien,
- la figure 9 représente partiellement les deux échangeurs thermiques et le support de fixation des figures 8a et 8b,
- la figure 10a représente de façon partielle et schématique un échangeur thermique et le support de fixation en position initiale de fixation,
- la figure 10b est une première vue représentant de façon partielle et schématique l'échangeur thermique en cours de désengagement du support de fixation,
- la figure 10c est une deuxième vue représentant de façon partielle et schématique l'échangeur thermique en cours de désengagement du support de fixation,
- la figure 10d est une troisième vue représentant de façon partielle et schématique l'échangeur thermique en cours de désengagement du support de fixation,
- la figure 10e est une quatrième vue représentant de façon partielle et schématique l'échangeur thermique en cours de désengagement du support de fixation, et
- la figure 10f représente de façon partielle et schématique l'échangeur thermique en position désengagée du support de fixation.

Dans ces figures, les éléments sensiblement identiques portent les mêmes références.

L'invention concerne un module d'échange de chaleur pour véhicule automobile, tel qu'un module de refroidissement 1 du moteur. Le refroidissement d'un moteur à combustion interne pour véhicule automobile est traditionnellement obtenu par une circulation d'eau au travers d'un circuit d'écoulement d'eau dans lequel se trouve disposé au moins un échangeur thermique.

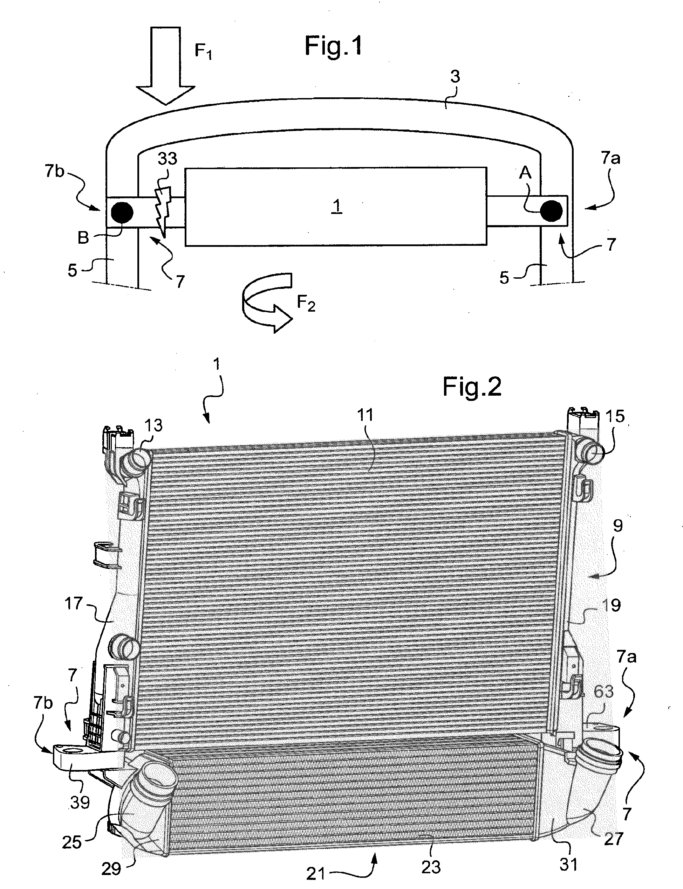

On a représenté de façon schématique sur la figure 1 un tel module de refroidissement 1 monté en face avant d'un véhicule (non représenté).

Le terme « avant » est à comprendre selon les orientations habituelles d'un véhicule automobile, et par rapport à la position d'un conducteur et du sens de marche normal du véhicule.

Plus précisément le module de refroidissement 1 est agencé entre le moteur (non représenté) et une structure porteuse 3 du véhicule.

Cette structure porteuse 3 peut être une poutre faisant partie de la caisse du véhicule ou encore un support de face avant prêt à être monté sur le véhicule par le constructeur. Le support de face avant peut intégrer divers équipements du véhicule, tels que les projecteurs, les clignotants, l'avertisseur sonore.

Le module de refroidissement 1 est fixé sur la structure porteuse 3 via des longerons 5 de la structure 3 disposés de chaque côté.

Le maintien du module de refroidissement 1 sur ces longerons 5 est assuré par un dispositif de maintien 7.

On décrit maintenant plus en détail le module de refroidissement 1 et son dispositif de maintien 7.

### Module de refroidissement

À titre d'exemple, le module de refroidissement 1 comprend un échangeur thermique 9 appelé radiateur de refroidissement 9 du moteur du véhicule.

De façon classique, ce radiateur 9 comprend :
- un faisceau de tubes 11 d'échange thermique entre lesquels peuvent être interposées des ailettes perturbatrices, en vue d'augmenter l'échange thermique avec un flux d'air qui traverse le radiateur 9,
- une entrée 13 d'un fluide de refroidissement,
- ainsi qu'une sortie 15 de ce fluide de refroidissement.

L'entrée 13 et la sortie 15 sont connectées à des boîtes collectrices respectives 17 et 19 du radiateur 9. Les boîtes collectrices 17 et 19 sont reliées par les tubes 11 1 d'échange thermique.

Le module de refroidissement 1 peut également comprendre un échangeur thermique 21 pour le refroidissement de l'air de suralimentation pour moteur thermique, tel qu'un moteur diesel de véhicule automobile. Un tel échangeur est généralement appelé refroidisseur d'air de suralimentation 21 faisant intervenir un fluide de refroidissement pour refroidir l'air de suralimentation.

Un tel échangeur peut être un échangeur dit « air-eau », c'est-à-dire un échangeur dans lequel les fluides qui échangent de la chaleur sont l'air et l'eau. Dans le cas d'un refroidisseur d'air de suralimentation; l'eau est de préférence de l'eau du circuit de refroidissement dit "basse température" dudit moteur; il s'agit typiquement d'eau glycolée.

De façon classique, ce refroidisseur 21 comprend :
- un faisceau de tubes 23 d'échange thermique entre lesquels peuvent être interposées des ailettes perturbatrices, en vue d'augmenter l'échange thermique avec un flux d'air de suralimentation qui traverse le refroidisseur 21,
- une entrée 25 du fluide de refroidissement,
- ainsi qu'une sortie 27 de ce fluide de refroidissement.

L'entrée 25 et la sortie 27 sont connectées à des boîtes collectrices respectives 29 et 31 du refroidisseur reliées par les tubes 23 d'échange thermique.

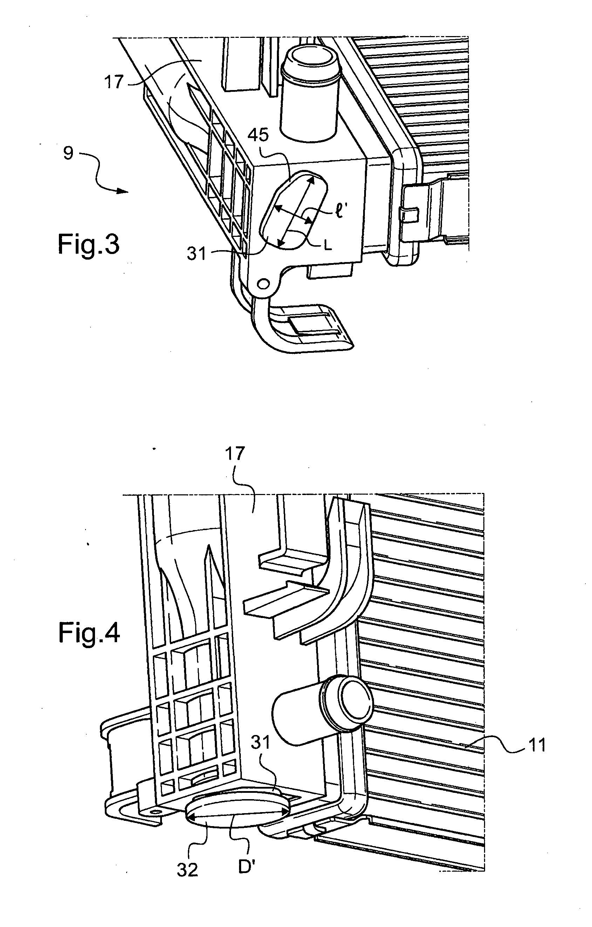

Le module de refroidissement 1 peut comprendre un seul de ces échangeurs thermiques (voir figure 3) ou les deux (voir figure 2).

Bien entendu on peut prévoir tout autre échangeur thermique pour la mise en oeuvre de l'invention.

En outre, comme cela sera décrit plus en détail par la suite chaque échangeur 9, 21 du module de refroidissement 1 comporte une protubérance 31 (figures 3, 4 et 5) pour coopérer avec le dispositif de maintien 7.

Cette protubérance 31 présente une forme importante pour la coopération avec le dispositif de maintien 7. Cette forme sera précisée par la suite.

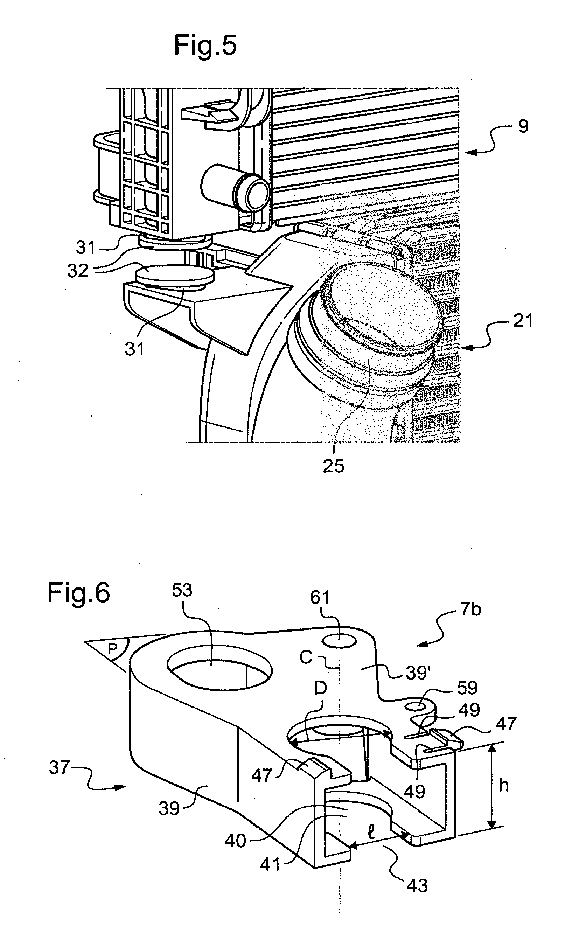

En outre, chaque échangeur 9,21 peut comporter une butée de retenue 32 (figures 4 et 5) du dispositif de maintien 7, cette butée 32 sera détaillée par la suite.

### Dispositif de maintien

Le dispositif de maintien 7 peut permettre la fixation d'un seul échangeur 9 ou encore de deux échangeurs 9 et 21 sur la face avant du véhicule.

En se référant à nouveau à la figure 1, le dispositif de maintien 7 du module de refroidissement 1 est configuré pour limiter les dégradations qui peuvent être occasionnées par un choc accidentel.

On parle plus particulièrement d'un choc normalisé dit choc DANNER. Ce choc est un choc frontal dans l'axe longitudinal du véhicule à une vitesse inférieure ou égale à 15 km/h. Ce choc est prévu du côté gauche du véhicule (non représenté). Le choc est représenté de façon schématique par la flèche F₁ sur la figure 1.

Comme précédemment le terme « frontal » est à comprendre par rapport au sens normal de marche du véhicule et du placement du conducteur. De même, le terme « gauche » est à comprendre selon les orientations habituelles du véhicule.

Le dispositif de maintien 7 comporte donc :
- un premier moyen de fixation 7a en un premier point de fixation A, et
- un deuxième moyen de fixation 7b en un deuxième point de fixation B distinct du premier point de fixation A.

Selon le mode de réalisation illustré, les premier A et deuxième B points de fixation sont opposés, c'est à dire d'un côté latéral du véhicule et de l'autre, et le second point de fixation B est du côté du choc, à savoir par exemple du côté gauche selon les normes du choc DANNER.

Le premier moyen de fixation 7a est un moyen de fixation configuré pour ne pas casser ou ne pas se désolidariser en cas de choc, tandis que le second moyen de fixation 7b est amovible de façon à désolidariser le module de refroidissement 1 de la structure porteuse 3 en cas de choc.

À cet effet, le second moyen de fixation 7b amovible peut présenter une ligne de faiblesse sécable en cas de choc prédéterminé.

Cette rupture en cas de choc est matérialisée de façon illustrative et schématique sur la figure 1 par la forme en éclair 33.

Le module 1 est donc pivotant comme l'illustre de façon schématique la flèche F ₂. Plus précisément une des extrémités du module 1 est articulée autour d'un axe de pivotement fixe formée par le premier point de fixation A.

Ainsi, en cas de choc selon la flèche F₁, la fixation au second point de fixation B du côté du choc se rompt et le module de refroidissement 1 pivote autour du premier point de fixation A, ce qui permet de préserver le module de refroidissement 1.

L'amplitude de déplacement angulaire du module de refroidissement 1 peut être délimitée par une butée (non représentée).

### Première variante : un seul échangeur fixé sur la structure porteuse par le dispositif de maintien

### Second moyen de fixation amovible

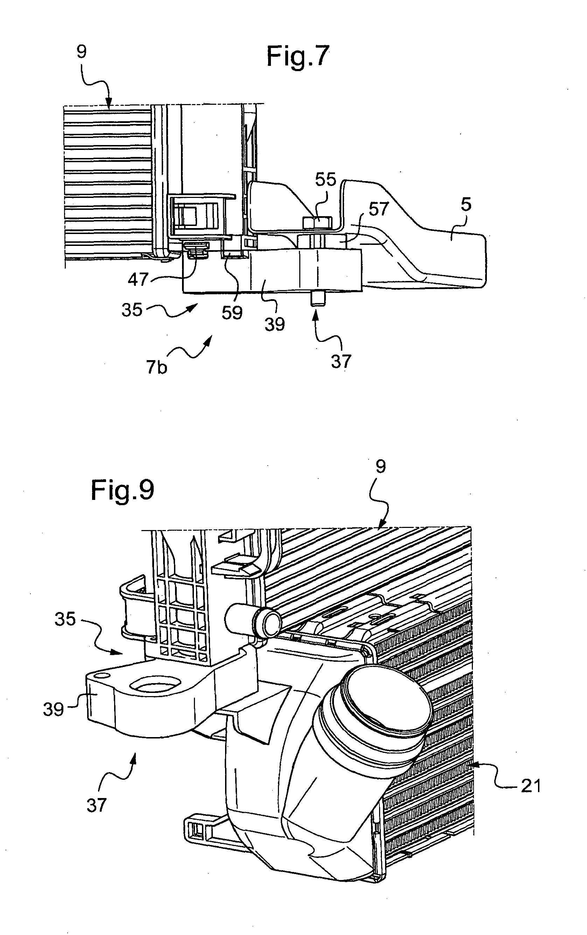

En se référant aux figures 6 et 7, on décrit maintenant plus en détail le second moyen de fixation 7b permettant de fixer un seul échangeur 9 sur un longeron 5.

Le second moyen de fixation 7b peut comporter une première fixation 35 à l'échangeur 9 et une deuxième fixation 37 au longeron 5. Une seule de ces fixations 35,37 est amovible en cas de choc pour permettre le pivotement de l'échangeur 9.

Selon les exemples illustrés, c'est la première fixation 35 qui est amovible, de sorte que le second moyen de fixation 7b se désolidarise de l'échangeur 9 en cas de choc.

Bien entendu, on pourrait prévoir en variante que la deuxième fixation 37 soit la fixation amovible, de sorte que le second moyen de fixation reste fixé à l'échangeur 9 mais se désolidarise du longeron 5 et donc de la structure porteuse 3 en cas de choc, pour permettre le pivotement de l'échangeur 9.

Selon le mode de réalisation illustré, le second moyen de fixation 7b comporte un support de fixation 39 mieux visible sur la figure 9. Le support de fixation 39 présente une première partie pour la première fixation 35 à l'échangeur 9 et une deuxième partie pour la deuxième fixation 37 au longeron 5. Le support de fixation 39 est par exemple en matériau plastique.

Plus précisément, pour la première fixation 35 à l'échangeur 9, le support de fixation 39 comporte un premier logement 40 et un décrochement 43 communiquant avec le premier logement 40.

Ce logement 40 et ce décrochement 43 sont configurés pour coopérer avec la protubérance 31 de l'échangeur 9.

Plus précisément, le logement 40 et le décrochement 43 débouchant dans le logement 40 présentent une forme générale complémentaire de la contre-forme correspondante de la protubérance 31 de l'échangeur 9.

Le logement 40 est prévu pour recevoir cette contre-forme de la protubérance 31 en fonctionnement normal du véhicule, sans choc, et permettre la fixation de l'échangeur 9 à la structure porteuse 3, plus précisément au longeron 5.

La forme sensiblement en trou de serrure et les dimensions du décrochement 43 sont choisies de façon à former un couloir pour l'introduction de la contre-forme de la protubérance 31 dans le logement 40 lors de la fixation sur la structure porteuse 3, ainsi que pour le désengagement de cette contre-forme de la protubérance 31 en cas de choc du véhicule. Ce couloir d'entrée et de sortie de la contre-forme de la protubérance 31 est donc immédiatement suivi du premier logement 40 pour recevoir la contre-forme de la protubérance 31.

Selon l'exemple illustré sur la figure 6, le premier logement de réception 40 comporte une ouverture 41 de forme générale sensiblement circulaire de diamètre D communiquant avec le décrochement 43.

Ce décrochement 43 lui peut être réalisé de façon parallèle au plan général P défini par une face 39' du support de fixation 39 et par exemple selon une forme générale sensiblement parallélépipédique de largeur 1.

Comme l'illustre la figure 6, l'ouverture 41 et le décrochement 43 peuvent être réalisés sur toute la hauteur h du support de fixation 39 et sont donc débouchants selon un axe débouchant C de part et d'autre du support de fixation 39. Cet axe débouchant C est sensiblement perpendiculaire au plan général P du support de fixation 39.

Ainsi de façon complémentaire, la contre-forme de la protubérance 31 (figure 3) portée par l'échangeur 9 est réalisée sous la forme d'une came 31 profilée de façon adaptée à l'ouverture 41 et au décrochement 43, pour pouvoir être introduite dans l'ouverture 41 et s'en dégager en cas de choc via le décrochement 43.

Selon le mode de réalisation illustré (figures 3 et 6), cette came 31 présente une forme générale sensiblement oblongue, présentant une longueur L sensiblement inférieure au diamètre D de l'ouverture circulaire 41 et une largeur 1 ' sensiblement inférieure à la largeur 1 du décrochement 43.

En outre, la came 31 peut présenter un chanfrein 45 pour faciliter encore l'introduction de la came 31 dans l'ouverture 41 via le décrochement 43, ainsi que son désengagement en cas de choc.

La cinématique pour le désengagement de la came 31 en cas de choc sera décrite par la suite.

En outre, pour maintenir la came 31 dans le logement 40, le second moyen de fixation 7b amovible comporte au moins une pièce de retenue 47 du support de fixation 39. Cette pièce de retenue 47 permet de maintenir le support de fixation 39 en position initiale, c'est à dire assemblé avec l'échangeur 9, temporairement jusqu'au choc éventuel, en étant par exemple sécable en cas de choc.

À cet effet, la pièce de retenue 47 est conformée de manière à se rompre sous un effort prédéterminé. Cet effort prédéterminé est défini en fonction des normes du choc DANNER.

La pièce de retenue 47 est par exemple aménagée sur la face 39' du support 39 en vis-à-vis de l'échangeur 9. Plus précisément, cette pièce de retenue 47 est agencée de part et d'autre du décrochement 43.

Cette pièce de retenue 47 sécable peut être une pièce de clipsage 47.

Comme on le constate sur la figure 6, cette pièce de clipsage 47 présente une forme sensiblement en crochet et des rainures 49 peuvent être ménagées dans le support de fixation 39 pour conférer une souplesse à cette pièce de clipsage 47.

Cette pièce de retenue 47 est donc une pièce empêchant le pivotement de l'échangeur 9 en fonctionnement en normal.

Par contre, en cas de choc, la pièce de retenue 47 rompt, et la came 31 peut se désengager du logement 40. L'extrémité gauche du module de refroidissement 1 est alors libre de pivoter pour limiter les dégradations éventuelles du module 1.

Comme mentionné précédemment, l'ouverture 41 et le décrochement 43 peuvent être réalisés débouchants selon un axe débouchant C de part et d'autre du support de fixation 39, et la came 31 reçue dans l'ouverture 41 présente une longueur L inférieure au diamètre D de l'ouverture 41.

Dans ce cas, c'est la butée de retenue 32 (voir figure 4) du support 39 qui permet d'empêcher au support de fixation 39 de glisser le long de l'axe débouchant C, et donc qui permet de maintenir en place la came 31 dans l'ouverture 41.

Cette butée 32 est par exemple réalisée sous la forme d'une rondelle 32 superposée sur la came 31 et de diamètre D' supérieur au diamètre D de l'ouverture 41.

En se référant à nouveau à la figure 6, en ce qui concerne la deuxième fixation 37 au longeron 5, le support de fixation 39 comporte un second logement 53 de réception d'une pièce de fixation stable en cas de choc. C'est-à-dire pour une fixation qui ne rompt pas en cas de choc DANNER.

En se référant à l'exemple des figures 6 et 7, le second logement 53 présente une ouverture débouchante selon un axe débouchant parallèle à l'axe C et la pièce de fixation est par exemple une vis 55 insérée dans cette ouverture 53.

En outre, on peut prévoir un amortisseur 57, par exemple réalisé en élastomère, entourant la vis 55 et faisant saillie par rapport à la face 39' du support de fixation 39 pour être interposé entre le support 39 et le longeron 5.

Cet amortisseur 57 est donc par exemple réalisé sous la forme d'un plot creux.

Ainsi, le support de fixation 39 (figure 6) présente en vue de dessus, une forme générale sensiblement en « 8 » avec une boucle fermée formant le second logement 53 pour une fixation au longeron 5 de la structure porteuse 3 du véhicule, et une boucle ouverte formant le premier logement 40 ouvert par le décrochement 43, pour la fixation amovible à l'échangeur 9.

Par ailleurs, on peut prévoir aussi que le support de fixation 39 comporte un troisième logement 59 supplémentaire de réception d'une pièce de fixation, telle qu'une vis, pour une réparation ultérieure au choc. Ainsi, en cas de choc, il peut être procédé rapidement à une réparation à faible coût du module de refroidissement 1, car seule une vis est à rajouter.

À titre d'exemple, on peut encore prévoir un quatrième logement 61 pour recevoir un guide de montage posé temporairement pour le montage sur chaîne. Il n'y a pas besoin d'autre intégration spécifique sur la chaine de montage véhicule.

### Premier moyen de fixation

Concernant le premier moyen de fixation 7a, on peut prévoir tout moyen de fixation connu permettant de garantir la fixation en cas de choc, tel qu'un choc DANNER, c'est-à-dire un choc frontal gauche de vitesse allant jusqu'à 15 Km/H.

On peut aussi prévoir de façon similaire au second moyen de fixation 7b, un support de fixation 63 (visible sur la figure 2) semblable au support de fixation 39 (figure 6) mais fixé à l'échangeur 9 de façon permanente, donc résistant au choc dit DANNER, par exemple, en utilisant une vis de fixation dans le logement 59.

### Deuxième variante : deux échangeurs fixés sur la structure porteuse par le dispositif de maintien

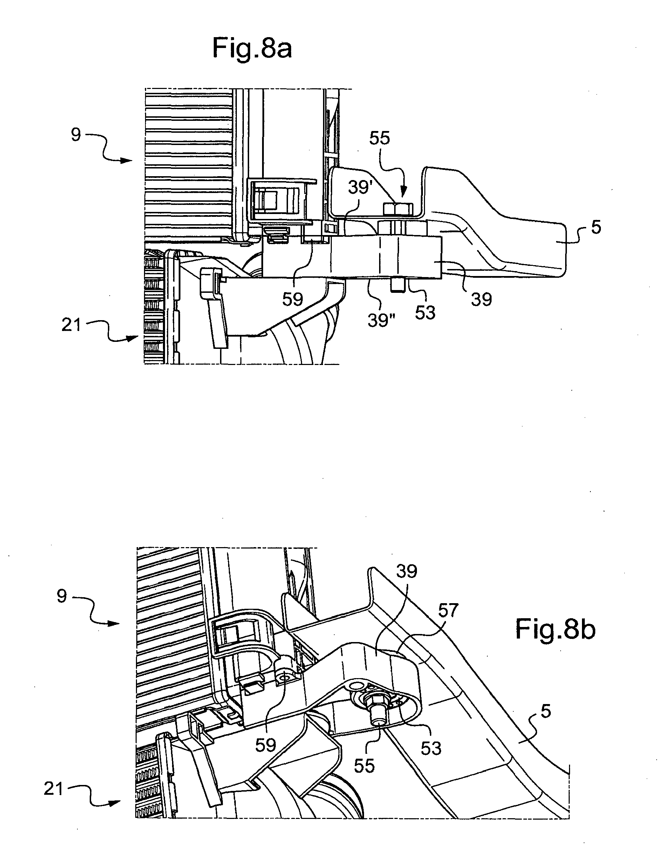

Dans le cas où le module de refroidissement 1 comporte deux échangeurs 9 et 21 1 tels que mentionnés précédemment (figure 2), un même support de fixation 39 peut servir à la fixation des deux échangeurs 9 et 21 au longeron 5 (figures 8a,8b).

En effet, comme décrit précédemment, l'ouverture 41 et le décrochement 43 peuvent être débouchants de part et d'autre du support de fixation 39 selon l'axe débouchant C. Dans ce cas sur une première face 39' du support 39, se fait l'assemblage avec l'échangeur 9, et sur la face opposée 39" du support 39 se fait l'assemblage avec le deuxième échangeur 21.

Ainsi, en référence aux figures 5, 6 et 8a,8b, l'ouverture 41 et le décrochement 43 débouchants coopèrent d'une part avec une came 31 portée par le premier échangeur 9 et d'autre part avec une came 31 par le deuxième échangeur 21.

Les caractéristiques du dispositif de maintien 7 pour la première variante avec un seul échangeur 9 restent identiques pour cette deuxième variante avec deux échangeurs 9 et 21.

### Fonctionnement lors d'un choc DANNER

Afin de mieux comprendre l'invention, la description ci-après détaille le fonctionnement du support de fixation 39 du dispositif de maintien 3 selon le mode de réalisation illustré, lors d'un choc frontal gauche inférieur à 15 Km/H (dit choc DANNER) qui tend à déplacer tout ou partie de la structure porteuse 3 en direction du module de refroidissement 1 selon la flèche F₁ (figure 1).

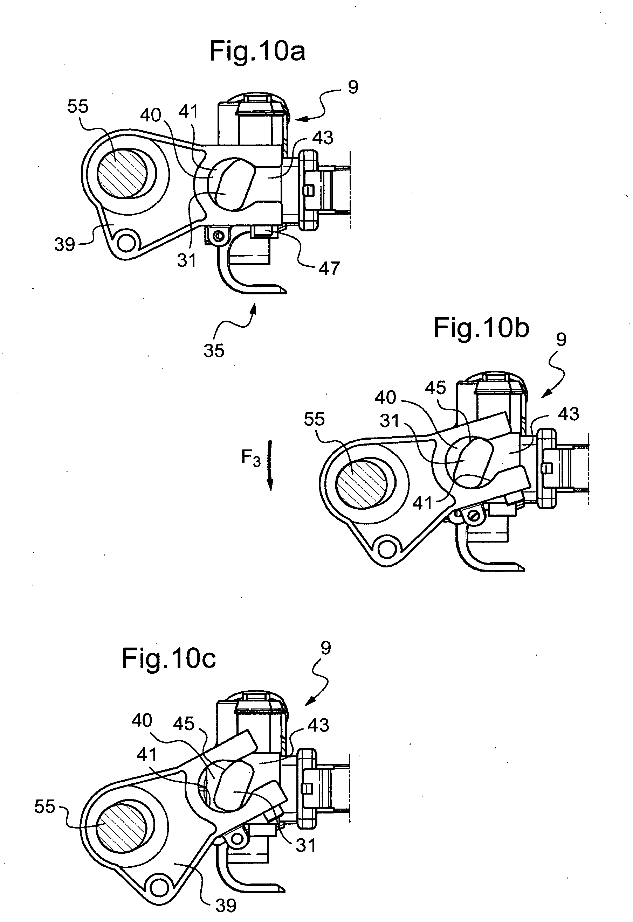

On a représenté sur les figures 10a à 10f une came 31 d'un seul échangeur 9 mais le fonctionnement est le même pour deux échangeurs 9,21.

On se place d'abord en position initiale (figure 10a) dans laquelle la came 31 est reçue dans l'ouverture 41 du support de fixation 39.

En cas de choc (figure 1), la structure porteuse 3 se dirige selon la flèche F₁ vers le module de refroidissement 1, ce dernier se déplace selon les composantes de l'effort donné par la structure porteuse 3.

Lorsque la résultante de l'effort est supérieure à l'effort de maintien du dispositif de maintien 7 en position initiale, plus précisément à l'effort de maintien appliqué par la pièce de retenue 47 du second moyen de fixation amovible 7b, alors la pièce de retenue 47 se rompt (figure 10b).

La fixation 37 au longeron 5 (non représenté sur les figures 10a à 10f) reste stable en cas de choc.

Seule la fixation 35 à l'échangeur 9 est rompue selon le mode de réalisation illustré.

Ainsi, en figure 10b le support 39 n'est plus bloqué en rotation par la pièce de retenue 47 et du fait de la coopération des formes de la came 31 et de l'ouverture 41, le support 39 est entraîné en rotation selon la flèche F₃ ce qui amorce le désengagement de la came 31 de l'ouverture 41.

Sur la figure 10c, on a représenté le support 39 continuant son mouvement de rotation selon la flèche F₃, et la came 31, plus précisément son chanfrein 45, coopère avec les contours du décrochement 43 pour s'introduire dans le couloir formé par le décrochement 43.

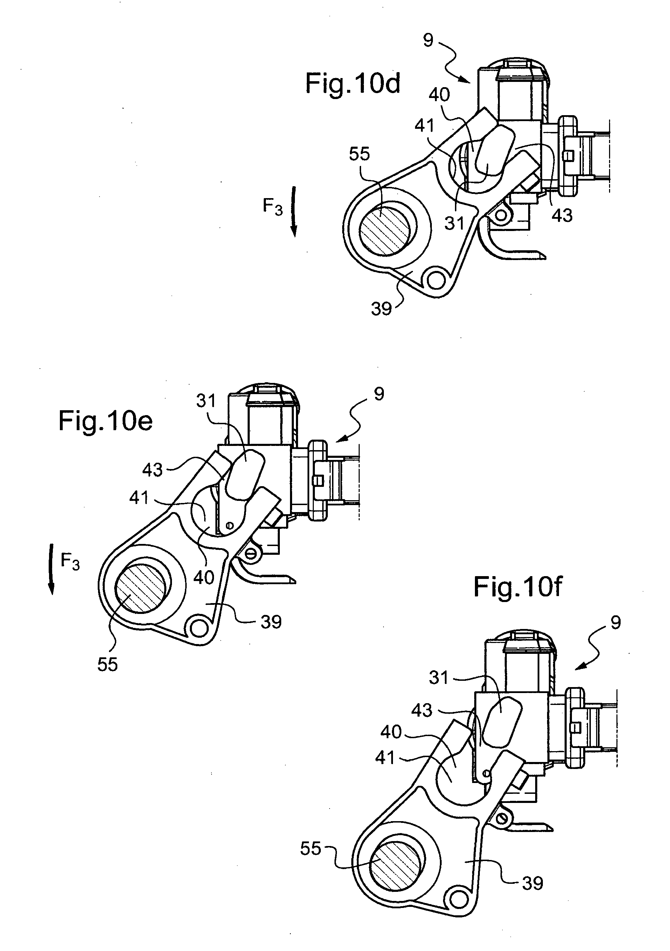

Sur la figure 10d, on a représenté la came 31 introduite dans le couloir formé par le décrochement 43. Sur la figure 10e, on a représenté la came 31 ayant libéré l'ouverture 41 et dont juste l'arrière est encore dans le couloir formé par le décrochement 43.

Enfin, la figure 10f illustre une position de désengagement dans laquelle la came 31 a complètement libéré l'ouverture 41 et le couloir formé par le décrochement 43 du support de fixation 39.

Bien entendu, la cinématique est la même lorsqu'il y a les deux échangeurs 9 et 21. Dans ce cas, chaque came 31 respective des échangeurs 9,21 se désengage de l'ouverture 41 débouchante via le décrochement 43 par coopération de forme entre d'une part la came 31 et d'autre part l'ouverture 41 et le décrochement 43.

Une fois en position désengagée (figure 10f), l'extrémité libérée du module de refroidissement 1 comprenant soit l'échangeur 9 soit les deux échangeurs 9 et 21, peut pivoter autour d'un axe sensiblement parallèle à l'axe C et passant par le point de fixation A opposé au choc selon la flèche F₂ illustrée sur la figure 1, pour éviter les dégradations du module de refroidissement 1.

Dans cette position désengagée illustrée sur la figure 10f, une réparation rapide peut être effectuée simplement en repositionnant le support de fixation 39 de sorte que la came 31 soit reçue dans l'ouverture 41 et en plaçant une vis de réparation dans le troisième logement 59.

Ainsi, un tel dispositif de maintien 7 propose une fixation qui se désengage du côté du choc du véhicule, de sorte que le ou les échangeurs 9,21 se libèrent de la structure porteuse 3 du côté du choc, libérant ainsi les contraintes et évitant des dommages plus importants du module 1 d'échange de chaleur tels que des fuites des échangeurs 9,21. On évite ainsi d'endommager le moteur.

En outre, ce dispositif de maintien 7 peut être changé facilement par un système de fixation classique n'impliquant donc pas de diversités ni de surcoût pour la construction des véhicules pour les pays n'utilisant pas le choc DANNER.

En outre, le surcoût de matière d'un tel dispositif de maintien 7 est négligeable par rapport à une solution classique et l'assemblage au module d'échange de chaleur 1 peut être géré avant la fixation sur le véhicule.

Enfin, ce dispositif de maintien peut être réparé facilement par exemple par simple vissage.

## Revendications

1. Module d'échange de chaleur pour véhicule automobile comprenant au moins un échangeur thermique (9, 21) et un dispositif de maintien dudit module (1) sur une structure porteuse (3) dudit véhicule, ledit dispositif de maintien comportant :
- un premier moyen de fixation (7a) en un premier point de fixation (A) et
- un second moyen de fixation (7b) amovible en un second point de fixation (B) distinct du premier point de fixation (A), ledit second moyen de fixation (7b) amovible étant configuré pour désolidariser ledit module (1) d'échange de chaleur de ladite structure porteuse (3) dudit véhicule audit second point de fixation (B), en cas de choc dudit véhicule,
ledit module étant **caractérisé en ce que** ledit premier moyen de fixation (7a) est configuré pour ne pas se désolidariser en cas de choc et **en ce que** l'une des extrémités dudit module (1) est articulée autour d'un axe de pivotement fixe formée par ledit premier point de fixation (A).

2. Module d'échange de chaleur selon la revendication 1, ledit premier point de fixation (A) et ledit second point de fixation (B) sont opposés.

3. Module d'échange de chaleur selon la revendication 2, **caractérisé en ce que** ledit second point de fixation (B) est du côté dudit choc.

4. Module d'échange de chaleur selon l'une quelconque des revendications précédentes, **caractérisé en ce que** ledit second moyen de fixation (7b) amovible comporte au moins une pièce de retenue (47) sécable en cas de choc.

5. Module d'échange de chaleur selon l'une quelconque des revendications précédentes, **caractérisé en ce que** ledit second moyen de fixation (7b) amovible comporte une première fixation (35) audit module (1) d'échange de chaleur et une deuxième fixation (37) à ladite structure porteuse (3) dudit véhicule, et **en ce qu'**une seule desdites fixations est amovible en cas de choc.

6. Module d'échange de chaleur selon la revendication 5, **caractérisé en ce que** ladite première fixation (35) est amovible, de sorte que ledit second moyen de fixation (7b) se désolidarise dudit module (1) d'échange de chaleur en cas de choc.

7. Module d'échange de chaleur selon l'une quelconque des revendications 5 ou 6, **caractérisé, en ce que** ledit second moyen de fixation (7b) amovible comporte un support de fixation (39) présentant :
- au moins un premier logement (40) de réception d'une contre-forme correspondante, et
- au moins un décrochement (43) communiquant avec ledit au moins un premier logement (40).

8. Module d'échange de chaleur selon la revendication 7, **caractérisé en ce que** ledit au moins un premier logement (41) de réception comporte une ouverture de forme générale sensiblement circulaire communiquant avec ledit décrochement (43), et configurée pour coopérer avec une contre-forme correspondante réalisée sous la forme d'une came (31) de forme sensiblement oblongue, présentant une longueur (L) sensiblement inférieure au diamètre (D) de ladite ouverture circulaire et une largeur (l') sensiblement inférieure à la largeur (l) dudit décrochement (43).

9. Module d'échange de chaleur selon l'une des revendications 7 ou 8, **caractérisé en ce que** ladite ouverture et ledit décrochement (43) sont débouchants selon un axe débouchant (C) de part et d'autre dudit support de fixation (39).

10. Module d'échange de chaleur selon la revendication 6 prise en combinaison avec l'une des quelconque revendications 7 à 9, **caractérisé en ce que** ledit support (39) est configuré pour coopérer avec une contre-forme correspondante portée par ledit module (1) d'échange de chaleur.

11. Module d'échange de chaleur selon la revendication 9 prise en combinaison avec la revendication 10, **caractérisé en ce que** ladite ouverture et ledit décrochement (43) débouchants sont configurés pour coopérer d'une part avec une contre-forme portée par un premier échangeur thermique (9) dudit module (1) d'échange de chaleur et d'autre part avec une contre-forme portée par un deuxième échangeur thermique (21) dudit module (1) d'échange de chaleur.

12. Module d'échange de chaleur selon l'une quelconque des revendications 5 à 11, **caractérisé en ce que** ledit support de fixation (39) comporte au moins un second logement (53) de réception d'une pièce de fixation (55) stable en cas de choc.

13. Module d'échange de chaleur selon la revendication 12, **caractérisé en ce que** ledit au moins un second logement (53) présente une ouverture débouchante.

14. Module d'échange de chaleur selon la revendication 9 prise en combinaison avec la revendication 13, **caractérisé en ce que** ledit support (39) présente une forme générale sensiblement en « 8 » dont une boucle est fermée et l'autre boucle est ouverte pour la fixation amovible.

15. Module d'échange de chaleur selon la revendication 8, **caractérisé en ce que** ledit au moins un échangeur thermique (9,21) porte au moins une dite came (31) configurée pour coopérer avec ledit support de fixation (39).

16. Module d'échange de chaleur selon la revendication 15, **caractérisé en ce que** ledit au moins un échangeur thermique (9,21) porte une butée (32) de retenue de ladite came (31) dans ladite ouverture circulaire selon l'axe débouchant (C) dudit support (39).

17. Module d'échange de chaleur selon la revendication 16, **caractérisé en ce que** ladite butée (32) est réalisée sous la forme d'une rondelle de diamètre (D') supérieur au diamètre (D) de ladite ouverture circulaire dudit support de fixation (39), ladite rondelle étant superposée sur ladite came (31).

## Patentansprüche

1. Wärmetauschmodul für ein Kraftfahrzeug, das mindestens einen Wärmetauscher (9, 21) und eine Haltevorrichtung des Moduls (1) auf einer Tragstruktur (3) des Fahrzeugs umfasst, wobei die Haltevorrichtung Folgendes umfasst:
- ein erstes Befestigungsmittel (7a) an einer ersten Befestigungsstelle (A), und
- ein zweites abnehmbares Befestigungsmittel (7b) an einer zweiten Befestigungsstelle (B), die von der ersten Befestigungsstelle (A) getrennt ist, wobei das zweite abnehmbare Befestigungsmittel (7b) ausgelegt ist, um das Wärmetauschmodul (1) von der Tragstruktur (3) des Fahrzeugs an der zweiten Befestigungsstelle (B) bei einem Aufprall des Fahrzeugs zu trennen,
wobei das Modul **dadurch gekennzeichnet ist, dass** das erste Befestigungsmittel (7a) ausgelegt ist, um sich bei einem Aufprall nicht zu trennen, und dass eines der Enden des Moduls (1) um eine stationäre Schwenkachse, die von der ersten Befestigungsstelle (A) gebildet wird, angelenkt ist.

2. Wärmetauschmodul nach Anspruch 1, **dadurch gekennzeichnet, dass** die erste Befestigungsstelle (A) und die zweite Befestigungsstelle (B) einander gegenüberliegen.

3. Wärmetauschmodul nach Anspruch 2, **dadurch gekennzeichnet, dass** die zweite Befestigungsstelle (B) auf der Seite des Aufpralls liegt.

4. Wärmetauschmodul nach einem der vorhergehenden Ansprüche, **dadurch gekennzeichnet, dass** das zweite abnehmbare Befestigungsmittel (7b) mindestens ein Halteteil (47), das im Fall eines Aufpralls teilbar ist, umfasst.

5. Wärmetauschmodul nach einem der vorhergehenden Ansprüche, **dadurch gekennzeichnet, dass** das zweite abnehmbare Befestigungsmittel (7b) eine erste Befestigung (35) an dem Wärmetauschmodul (1) und eine zweite Befestigung (37) an der Tragstruktur (3) des Fahrzeugs umfasst, und dass nur eine der Befestigungen bei einem Aufprall abnehmbar ist.

6. Wärmetauschmodul nach Anspruch 5, **dadurch gekennzeichnet, dass** die erste Befestigung (35) derart abnehmbar ist, dass sich das zweite Befestigungsmittel (7b) von dem Wärmetauschmodul (1) bei einem Aufprall trennt.

7. Wärmetauschmodul nach einem der Ansprüche 5 oder 6, **dadurch gekennzeichnet, dass** das zweite abnehmbare Befestigungsmittel (7b) einen Befestigungsträger (39) umfasst, der Folgendes aufweist:
- mindestens eine erste Aufnahme (40) einer entsprechenden Gegenform, und
- mindestens einen Rücksprung (43), der mit der mindestens einen ersten Aufnahme (40) kommuniziert.

8. Wärmetauschmodul nach Anspruch 7, **dadurch gekennzeichnet, dass** die mindestens eine erste Aufnahme (40) eine Öffnung allgemein im Wesentlichen in Kreisform umfasst, die mit dem Rücksprung (43) kommuniziert, und ausgelegt ist, um mit einer entsprechenden Gegenform zusammenzuwirken, die in Form eines Nockens (31) mit im Wesentlichen länglicher Form hergestellt ist, der eine Länge (L) im Wesentlichen kleiner als der Durchmesser (D) der kreisförmigen Öffnung und eine Breite (l') im Wesentlichen kleiner als die Breite (l) des Rücksprungs (43) aufweist.

9. Wärmetauschmodul nach einem der Ansprüche 7 oder 8, **dadurch gekennzeichnet, dass** die Öffnung und der Rücksprung (43) entlang einer Achse (C), die auf beiden Seiten des Befestigungsträgers (39) mündet, münden.

10. Wärmetauschmodul nach Anspruch 6 in Kombination mit einem der Ansprüche 7 bis 9, **dadurch gekennzeichnet, dass** der Träger (39) ausgelegt ist, um mit einer entsprechenden Gegenform, die von dem Wärmetauschmodul (1) getragen wird, zusammenzuwirken.

11. Wärmetauschmodul nach Anspruch 9 in Kombination mit Anspruch 10 genommen, **dadurch gekennzeichnet, dass** die durchgehende Öffnung und der durchgehende Rücksprung (43) ausgelegt sind, um einerseits mit einer Gegenform, die von einem ersten Wärmetauscher (9) des Wärmetauschmoduls (1) getragen wird, und andererseits mit einer Gegenform, die von einem zweiten Wärmetauscher (21) des Wärmetauschmoduls (1) getragen wird, zusammenzuwirken.

12. Wärmetauschmodul nach einem der Ansprüche 5 bis 11, **dadurch gekennzeichnet, dass** der Befestigungsträger (39) mindestens eine zweite Aufnahme (53) eines Befestigungsteils (55), das im Fall eines Aufpralls feststehend ist, umfasst.

13. Wärmetauschmodul nach Anspruch 12, **dadurch gekennzeichnet, dass** die mindestens eine zweite Aufnahme (53) eine durchgehende Öffnung aufweist.

14. Wärmetauschmodul nach Anspruch 9, in Kombination mit Anspruch 13 genommen, **dadurch gekennzeichnet, dass** der Träger (39) allgemein im Wesentlichen die Form einer 8 aufweist, von der eine Schleife geschlossen und die andere Schleife für die abnehmbare Befestigung offen ist.

15. Wärmetauschmodul nach Anspruch 8, **dadurch gekennzeichnet, dass** der mindestens eine Wärmetauscher (9, 21) mindestens einen Nocken (31) trägt, der ausgelegt ist, um mit dem Befestigungsträger (39) zusammenzuwirken.

16. Wärmetauschmodul nach Anspruch 15, **dadurch gekennzeichnet, dass** der mindestens eine Wärmetauscher (9, 21) einen Rückhalteanschlag (32) des Nockens (31) in der kreisförmigen Öffnung entlang der durchgehenden Achse (C) des Trägers (39) trägt.

17. Wärmetauschmodul nach Anspruch 16, **dadurch gekennzeichnet, dass** der Anschlag (32) in Form einer Unterlegscheibe mit einem Durchmesser (D') hergestellt ist, der größer ist als der Durchmesser (D) der kreisförmigen Öffnung des Befestigungsträgers (39), wobei die Unterlegscheibe über dem Nocken (31) liegt.

## Claims

1. Heat-exchange module for a motor vehicle comprising at least one heat exchanger (9, 21) and a device for holding the said module (1) on a supporting structure (3) of the said vehicle, the said holding device comprising:
- a first fixing means (7a) at a first fixing point (A) and
- a second, removable fixing means (7b) at a second fixing point (B) separate from the first fixing point (A), the said second, removable fixing means (7b) being configured to disconnect the said heat-exchange module (1) from the said supporting structure (3) of the said vehicle at the said second fixing point (B) in the event of an impact of the said vehicle,
the said module being **characterized in that** the said first fixing means (7a) is configured so as not to become disconnected in the event of an impact and **in that** one of the ends of the said module (1) is articulated about a fixed pivoting axis formed by the said first fixing point (A).

2. Heat-exchange module according to Claim 1, **characterized in that** the said first fixing point (A) and the said second fixing point (B) are opposed.

3. Heat-exchange module according to Claim 2, **characterized in that** the said second fixing point (B) is on the same side as the said impact.

4. Heat-exchange module according to any one of the preceding claims, **characterized in that** the said second, removable fixing means (7b) comprises at least one retaining part (47) which is breakable in the event of an impact.

5. Heat-exchange module according to any one of the preceding claims, **characterized in that** the said second, removable fixing means (7b) comprises a first fixing (35) to the said heat-exchange module (1) and a second fixing (37) to the said supporting structure (3) of the said vehicle, and **in that** only one of the said fixings is removable in the event of an impact.

6. Heat-exchange module according to Claim 5, **characterized in that** the said first fixing (35) is removable such that the said second fixing means (7b) is disconnected from the said heat-exchange module (1) in the event of an impact.

7. Heat-exchange module according to either one of Claims 5 and 6, **characterized in that** the said second, removable fixing means (7b) comprises a fixing support (39) having:
- at least one first housing (40) for receiving a corresponding counter-shape, and
- at least one cutaway (43) communicating with the said at least one first housing (40).

8. Heat-exchange module according to Claim 7, **characterized in that** the said at least one first reception housing (40) comprises an opening of substantially circular general shape communicating with the said cutaway (43), and configured to cooperate with a corresponding counter-shape produced in the form of a cam (31) of substantially oblong shape having a length (L) substantially smaller than the diameter (D) of the said circular opening and a width (l') substantially smaller than the width (l) of the said cutaway (43).

9. Heat-exchange module according to either of Claims 7 and 8, **characterized in that** the said opening and the said cutaway (43) are emerging along an emerging axis (C) on either side of the said fixing support (39).

10. Heat-exchange module according to Claim 6 taken in combination with any one of Claims 7 to 9, **characterized in that** the said support (39) is configured to cooperate with a corresponding counter-shape borne by the said heat-exchange module (1).

11. Heat-exchange module according to Claim 9 taken in combination with Claim 10, **characterized in that** the said emerging opening and the said emerging cutaway (43) are configured to cooperate, on the one hand, with a counter-shape borne by a first heat exchanger (9) of the said heat-exchange module (1) and, on the other hand, with a counter-shape borne by a second heat exchanger (21) of the said heat-exchange module (1).

12. Heat-exchange module according to any one of Claims 5 to 11, **characterized in that** the said fixing support (39) comprises at least one second housing (53) for receiving a fixing part (55) which is stable in the event of an impact.

13. Heat-exchange module according to Claim 12, **characterized in that** the said at least one second housing (53) has an emerging opening.

14. Heat-exchange module according to Claim 9 taken in combination with Claim 13, **characterized in that** the said support (39) has a general shape substantially in the form of an "8" of which one loop is closed and the other loop is open for the removable fixing.

15. Heat-exchange module according to Claim 8, **characterized in that** the said at least one heat exchanger (9, 21) bears at least one said cam (31) configured to cooperate with the said fixing support (39).

16. Heat-exchange module according to Claim 15, **characterized in that** the said at least one heat exchanger (9, 21) bears a stop (32) for retaining the said cam (31) in the said circular opening along the emerging axis (C) of the said support (39).

17. Heat-exchange module according to Claim 16, **characterized in that** the said stop (32) is produced in the form of a washer having a diameter (D') greater than the diameter (D) of the said circular opening of the said fixing support (39), the said washer being superposed on the said cam (31).
